Europäisches Patentamt

European Patent Office

Office européen des brevets

(19)

(11) Publication number: **0 131 345**
**A2**

(12) **EUROPEAN PATENT APPLICATION**

(21) Application number: **84201007.6**

(22) Date of filing: **11.07.84**

(51) Int. Cl.⁴: **B 29 C 67/22**
**F 25 D 23/06**

(30) Priority: **12.07.83 IT 2201883**

(43) Date of publication of application:
**16.01.85 Bulletin 85/3**

(84) Designated Contracting States:
**DE FR GB SE**

(71) Applicant: **N.V. Philips' Gloeilampenfabrieken**
**Groenewoudseweg 1**
**NL-5621 BA Eindhoven(NL)**

(72) Inventor: **Piva Giuliano**
**INT. OCTROOIBUREAU B.V. Prof. Holstlaan 6**
**NL-5656 AA Eindhoven(NL)**

(72) Inventor: **Radice, Romano**
**INT. OCTROOIBUREAU B.V. Prof. Holstlaan 6**
**NL-5656 AA Eindhoven(NL)**

(74) Representative: **Bos, Kornelis Sjoerd et al,**
**INTERNATIONAAL OCTROOIBUREAU B.V.**
**Prof.Holstlaan 6**
**NL-5656 AA Eindhoven(NL)**

(54) **Method for producing casings like cabinets and doors of refrigeration appliances, and machine arrangement therefor.**

(57) The invention relates to a method for producing casings (1) like cabinets and doors of refrigerator appliances, in which reactive polyurethane is fed into the interspace between an inner- and outer wall (2, 4) of the casing. In order to increase the productivity the polymerisation reaction takes place in two successive positions, a first phase of the reaction taking place in the first position upon which first counteracting means (14, 14A.15) are removed at least from the outer walls and the casing is brought into a second position in which second counteracting means (21, 21A, 22) are placed against the outer walls of the casing and whereupon the second and final phase of the polymerisation reaction takes place. The invention relates also to a machine arrangement for performing the method.

Fig. 5

"Method for producing casings like cabinets and doors of refrigeration appliances, and machine arrangement therefore".

The invention relates to a method for producing casings like cabinets and doors of refrigeration appliances, in which an inner and an outer wall, after being connected together in a spaced-apart relationship and forming the casing, are placed in a first position, where first counteracting means are placed against the inner and outer walls and then reactive polyurethane components are fed into the interspace between the walls causing the forming of a thermal insulation by virtue of a polymerisation reaction. The invention also relates to a machine arrangement for performing the method. The most current method for producing insulated cabinets for refrigeration appliances, such as refrigerators, horizontal and vertical freezers, refrigerated display cabinets and the like, comprises preheating the inner and outer cabinet walls, generally in an oven, after they have been connected together in a spaced-apart relationship. These walls are also known in industrial jargon as the outer wall and inner liner respectively. The preheating serves to create the thermal conditions necessary for triggering the exothermic reaction between the components which give rise to the foamed polyurethane mass, this constituting the thermal insulation and the medium which makes the cabinet monolithic.

When preheated, the cabinet is transferred into a mould which is essentially formed from a female element which externally surrounds the cabinet, and a male element which is disposed in the cavity or compartment defined by the inner wall of the cabinet. In its female element, the mould in question is provided with an injection nozzle through which the reactive components which form the insulating polyurethane mass are fed into the interspace which exists between the walls. The purpose of the mould is to contain the thrusts which are exerted on the walls during this reaction and which could otherwise deform them. The cabinet is removed from the mould a certain time after injection of the reactive components, i.e. when the thrusts deriving from the reaction (which has a fairly long reaction time) have assumed a value such as to be able to be supported by the cabinet without apparent deformation. In a typical operating cycle which uses commercial reactive components, each mould can produce one cabinet about every 6 minutes and 30 seconds, of which 30 seconds are spent: a) for transfer from the preheating oven to the mould; b) for injecting the relative components; and c) for extracting the cabinet from the mould. The remaining 6 minutes are occupied by the polymerisation reaction of said components. This therefore means that the hourly production of a production line comprising means for conveying the walls from the oven, the preheating mould and means for conveying the finished cabinet is little more than 9 cabinets.

As stated heretofore, the polymerisation is exothermic, which means that it is advantageous to trigger it by applying heat, but that when the reaction has been triggered, it must be cooled if the polymerisation process is to be accelerated. This cooling is not implemented in practice because the mould has a thermal inertia such that the cooling effects would begin to be felt after such a long time as to provide no practical benefit to the polymerisation process. In fact, a useful cooling effect would be obtained only when the cabinet has already been removed from the mould.

From a statistical analysis of the reaction curves as a function of time, it has been found that the reaction, and thus the thrusts exerted on the walls, reaches a maximum after a relatively short time (about one minute after feeding the reactive components in the preceding example), and then decreases initially with a higher gradient (to nearly 3 minutes in the example) and then with a lower gradient, with a tendency towards zero after a time which exceeds the time at which the finished cabinet is currently removed from the mould (i.e. 6 minutes).

The object of the invention is to increase the productivity per unit of capital invested, reduce the area occupied by the machine arrangement for equal hourly production, and reduce energy consumption, management costs and the cabinet handling equipment costs. According to the invention, the polymerisation reaction takes place when the casing is placed in two successive positions, a first phase of the polymerisation reaction taking place in the first position, then at least the first counteracting means placed against the outer walls are removed and the casing is brought into a second position in which second counteracting means are placed against at least the outer walls of the casing and whereupon the second and final phase of the polymerisation reaction takes place. The wall preheating phase, which precedes the polymerisation phase, can be easily limited to about one half of the time for which the cabinet remains in the two positions in which the total polymerisation reaction takes place and thus the method of the invention, when related to a production line structured for optimised utilisation, enables an hourly production rate to be reached which is about 1.9 times greater than that of a conventional production line. The new production line may be apparently more complicated and costly because of the need of extra counteracting means, but in effect it results in substantial reduction in investment costs per cabinet produced. Because of substantial similarities in the manufacture of refrigerator cabinet doors, which also comprise outer and inner walls with polyurethane thermal insulation formed in the interspace between the two walls, the method of the invention is also applicable to the production of such doors.

According to the invention a machine arrangement for performing the claimed method comprising a first mould having first counteracting means and having feeding means for feeding the reactive polyurethane components into the interspace of the casing is characterized in that there is a second mould, placed after the first mentioned mould and provided with second counteracting means, and transferring means for transferring the casing from the first to the second mould.

The invention will be more apparent from the detailed description of a preferred embodiment given hereinafter by way of non-limiting example, with reference to the accompanying drawing in which:

Figure 1 shows the progress of the polymerisation reaction of the thermal polyurethane insulation as a function of time;

Figure 2 is a diagrammatic illustration showing the duration of the various phases of the conventional process, from the preheating of the two connected walls to the extraction of the finished cabinet from the mould in which the insulation is formed;

Figure 3 is a diagrammatic illustration of a conventional production line in which the phases of Figure 2 are carried out;

Figure 4 is a diagrammatic illustration showing the duration of the various phases of the method according to the invention;

Figure 5 is a diagrammatic illustration of a production line formed in accordance with the invention;

Figures 6,7 and 8 show machine arrangement modifications;

Figure 9 is a diagrammatic illustration, with parts in full view and parts in vertical section, showing a line for the production of refrigerator cabinet doors formed in accordance with the invention.

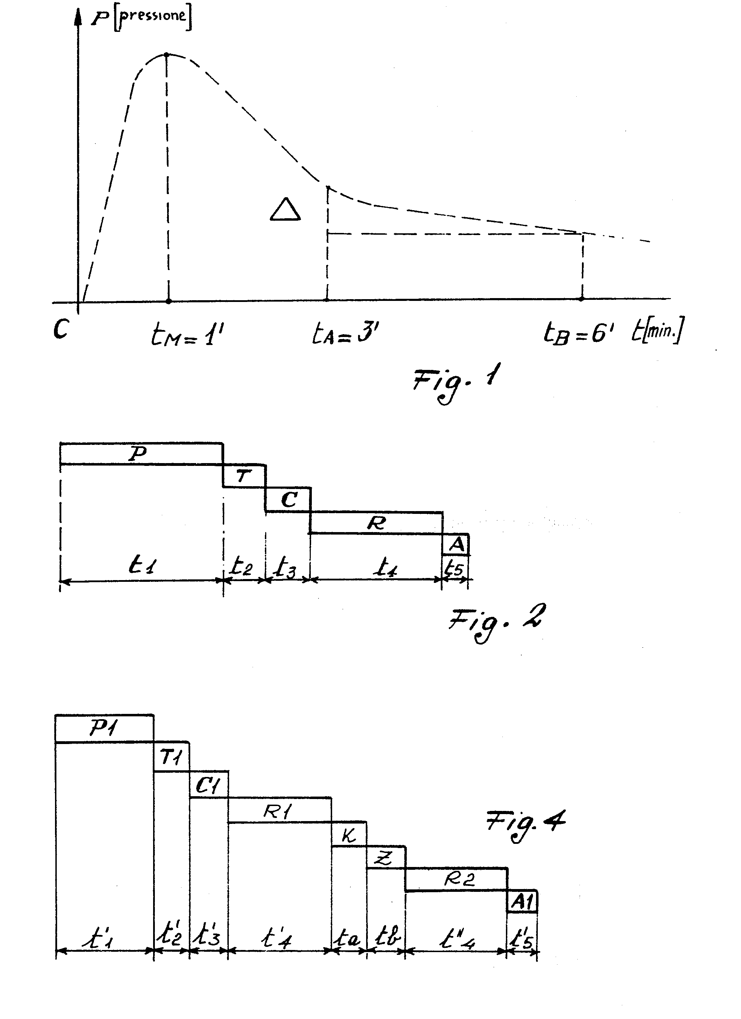

In the known manner, a cabinet 1 (see Figure 3) for refrigeration

0131345
14-06-1984

appliances comprises an inner wall 2 which defines one or more preservation compartments 3, an outer wall 4 spaced apart from the former, and an insulating mass of polyurethane foam which fills the interspace between the two walls 2,4 and also makes them rigid with each other.

In a well known production method, the two walls 2,4 are connected together so that there is an interspace between them in which the foamed polyurethane insulation forms. The two walls connected together in this manner are fed by a conveyor into a preheating oven 5, where they are preheated in order to allow triggering of the subsequent exothermic polymerisation reaction between the components which form the polyurethane insulation. The preheated connected walls are fed by a conveyor into a known
mould 6 with moveable counteracting side walls 7, 7A, and a vertically
moveable male element 8 which is inserted into the compartment 3 defined
by the inner wall 2. One of the side walls in question, namely the end side
wall 7A, is provided with a nozzle 9 through which the reactive polyurethane components are injected into the interspace between the two walls 2
and through an aligned bore present in corresponding points thereof. The
purpose of the mould is to contain the very large thrusts which the polymerisation reaction exerts on the walls which, if not counteracted, will
at least lead to their deformation. After injecting the reactive polyurethane components, the cabinet is left in the mould for a certain time,
the mould is then opened and the cabinet, which is complete with insulation, is withdrawn by the longitudinal conveyor belts 10 provided at the
level of the mould base 11.

Figure 2 shows the duration of the various phases (commencing
with the preheating phase and terminating with the removal of the cabinet
from the mould) of the aforesaid conventional process. The preheating
phase P lasts for a time $t_1$, which could be limited to three minutes but
which is in reality about double this as will be explained hereinafter,
as it is dependent on the subsequent phases. In the next time interval,
indicated by T and having a duration $t_2$ of about 10 seconds, the connected walls 2,4 heated by the oven 5 are transferred to the mould 6, and
this latter is closed. In the meantime, a new pair of connected walls has
reached the oven 5. In the next phase C, having a duration $t_3$ of about
10 seconds, the reactive polyurethane components are injected into the
interspace between the two walls 2,4. A phase R follows lasting for a
time $t_4$ of about 6 minutes, during which the polyurethane insulation mass
forms. This is followed by the phase A in which the mould is opened and
the cabinet removed, and which has a duration $t_5$ of about 10 seconds. It
is apparent that the time $t_1$ for which the cabinet remains in the preheating mould 5 is slightly greater than $t_3 + t_4$, i.e. 6 minutes and 10
seconds. This is excessive when considering that in fact the said oven
raises the temperature of the two connected walls 2,4 to the necessary
level in a much shorter time, namely about 3 minutes.

By means of repeated sets of pressure measurements made on the cabinet (while disposed in the mould) using transducers fitted to said cabinet, it has been found that the pressure and thus thrust variation as a function of time is as shown in Figure 1. The pattern in question is also representative of the progress of the reaction, as the pressure is related to this progress. Analysing the curve in question, in which the abscissa axis represents time (t) and the ordinate axis represents pressure, it can be seen that there is a maximum approximately 1 minute from termination of the injection, followed by a portion of steep gradient (known as the stabilisation stage) between 1 and 3 minutes, followed, after a curve at about 3 minutes, by a portion of low gradient known as the settling phase, which extends beyond 6 minutes, i.e. beyond the time at which the cabinet is removed from the mould. The residual reactivity represented by the ordinate value corresponding to a time $t_B$ of 6 minutes is unable to produce sufficient thrusts to cause cabinet deformation.

Further analysing the curve in question, it can be seen that short time intervals subsequent to a time of 3 minutes do not produce substantial differences in the pressure and consequent thrust exerted on the walls. From the aforesaid analysis, it is apparent that from the time $t_A$ of 3 minutes until the time $t_B$ at which the cabinet is removed from the mould, i.e. 6 minutes, a less robust structure and thus a less robust mould is sufficient to counteract this residual thrust. Furthermore, it has been experimentally and surprisingly found that if the conventional mould of Figure 3 is opened for a brief time, of the order of some 10 seconds, subsequent to $t_A$ and then closed again, no significant cabinet deformation occurs. From these observations, it can be concluded according to the invention that the polymerisation phase, in which the thrusts must be contained in order to prevent appreciable deformation of the walls of the finished product, can take place in two different successive positions, i.e. in two different moulds, in a time which exceeds $t_B$ only slightly, namely by the time involved in opening and closing the moulds and transferring the cabinet from one mould to the other, and which can be reduced to a very small value by placing the two moulds close together.

The advantages deriving from the use of the inventive method will be apparent from the following description.

A preferred embodiment of the machine arrangement according to the invention (see Figure 5) comprises a conventional preheating oven 12, which can be completely similar to the oven 5 used in the known arrangement of Figure 3. Downstream there is a mould 13 which can also be identical to the known mould 6 of Figure 3, and then a second mould indicated by 20, which if a pre-existing arrangement or line is to be converted can be identical to the mould 13 but with the nozzle 16 made inoperative, whereas in the case of a purpose-designed arrangement, the mould can be less robust, simpler, and with certain parts excluded, for example the male second counteracting element 22 which is designed to enter the inner compartment of the casing. Advantageously, according to a particular aspect of the invention, in order to accelerate the polymerisation reaction, the mould 20 is provided with second counteracting side walls 21 cooled by forced water circulation, and for this purpose connected to a central cooling unit 23, which can comprise a pump, a refrigeration circuit and a heat exchanger, in which the cooling water transfers its heat to the liquid circulating through the refrigeration circuit.

As shown diagrammatically by the duct 24, it is possible to recover hot air from that side of the mould 20 which is not water-cooled, i.e. counteracting element 22, by playing an air stream on to it generated from a fan 25, and then feeding it into the oven.

The operating cycle of the production line according to the invention, shown in Figure 5, is as illustrated in Figure 4. The time $t'_1$ of the preheating phase P1 can here be limited to the strictly necessary amount, and in particular to one half the time $t_B$ of the diagram of Figure 1 (as stated, $t_B$ is the time at which the cabinet is removed from a conventional arrangement of the type shown in Figure 3). If $t_B$ is 6 minutes, then the time $t'_1$ is 3 minutes. This is followed by the transfer phase T1 in which the cabinet is transferred from the oven 12 to the first mould 13, and this latter then closed by the first counteracting walls 14, 14A, 15 the duration $t'_2$ of this phase being equal to $t_2$, i.e. 10 seconds. The phase $C_1$ in which the reactive polyurethane components are injected into the interspace between the two connected walls situated in the mould 13 takes place over a time of $t'_3$, which is equal to $t_3$ (Figure 2), i.e. 10 seconds. The two walls remain in this mould for a time of $t'_4$, which is substantially one half of the aforesaid time $t_B$, i.e. for 3 minutes. In this phase, i.e. R1, the chemical polymerisation reaction reaches its peak (see Figure 1) and results in the maximum thrust on the walls. Phases K and Z take place during times ta and tb (both of about 10 seconds), the former phase corresponding to the opening of the first mould 13 and transfer of the cabinet to the second mould 20 which is situated as close as possible to the preceding, and the latter phase corresponding to closure of the second mould 20. Polymerisation continues in the second mould 20 during the phase indicated by R2 for a time $t''_4$, which is also equal to one half $t_B$, i.e. about 3 minutes, during which the reaction curve of Figure 1 extends between the abscissa values $t_A$ and $t_B$. This is followed finally by the phase A1 in which the cabinet is withdrawn from the second mould, and has a duration equal to or less than $t_5$, i.e. 10 seconds, because the second mould 20 can be lighter and can thus be opened and closed in a time shorter than that necessary for the mould 13.

By adding the times, it is apparent that a conventional production line, such as that shown in Figure 3, is able, once started, to produce one cabinet in a time (see Figure 2) of $t_2 + t_3 + t_4 + t_5$, i.e. 6 minutes and 30 seconds, whereas the production line according to the invention (see Figure 4) can produce two cabinets in a time $t'_2 + t'_3 + t'_4 +$ ta + tb + $t''_4$ + $t'_5$ of about 6 minutes and 50 seconds. This is because when under full operating conditions, while a first cabinet is being removed from the second mould 20, another cabinet disposed in the first mould 13 is either about to be or is being transferred into the second mould 20.

In order to obtain a production rate which is only slightly higher than that of a line constructed in accordance with the invention, the conventional method would require the use of two lines, each composed of a mould with injection nozzle, a preheating oven, and double handling means (for feeding the walls and discharging the cabinet), and involving an overall area which is considerably larger. Moreover, the presence of a second oven would require higher energy consumption. These negative aspects are not present in the production line according to the invention, which also has further advantages, comprising better control of the polymerisation reaction, improvement in the quality of the produced cabinet (because cooling can be applied to the polymerisation taking place in the second mould 20), and finally in reduced operating costs.

The invention also covers the embodiments illustrated diagrammatically in Figures 6,7 and 8 of the drawing. The embodiments shown diagrammatically in horizontal section in Figure 6 allows two cabinets to be produced simultaneously, and for this purpose comprises a double oven 12B, i.e. with two side-by-side chambers, and a first double mould 13B with two compartments 30, 31, having its male counteracting elements 15B mounted on the same plate, which is vertically moveable along the uprights 32. The first mould 13B comprises two counteracting side walls 14B and end walls 14AB with injection nozzles, and conveying belts 17B. The downstream second mould 20B in which the second part of the polymerisation is carried out is also double, and as the reference numeral indicates corresponds to the second mould 20 of Figure 5, added with the capital letter B.

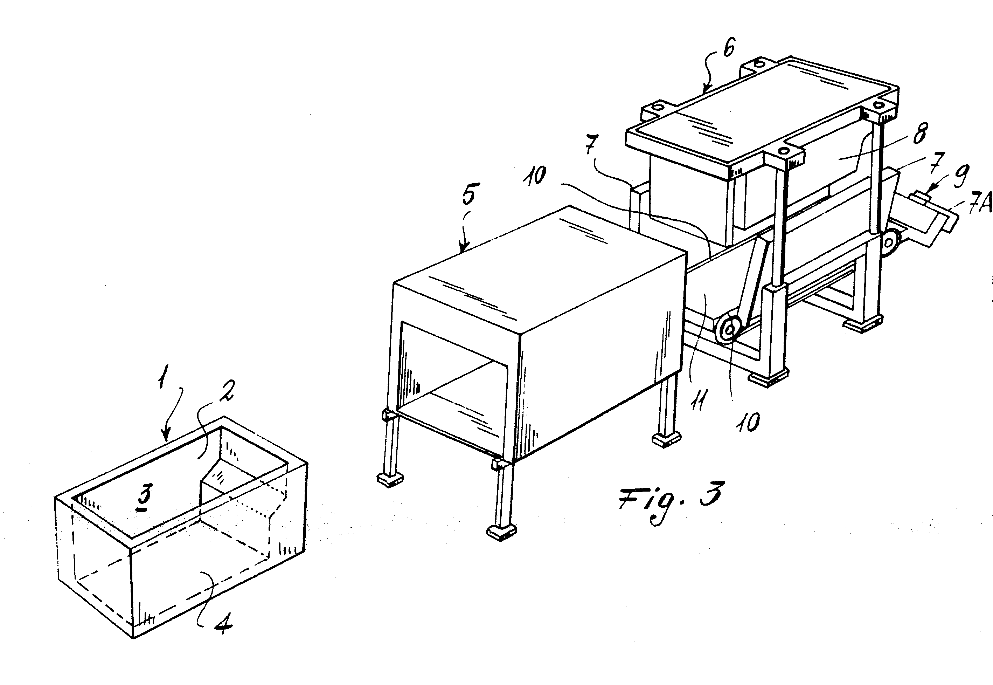

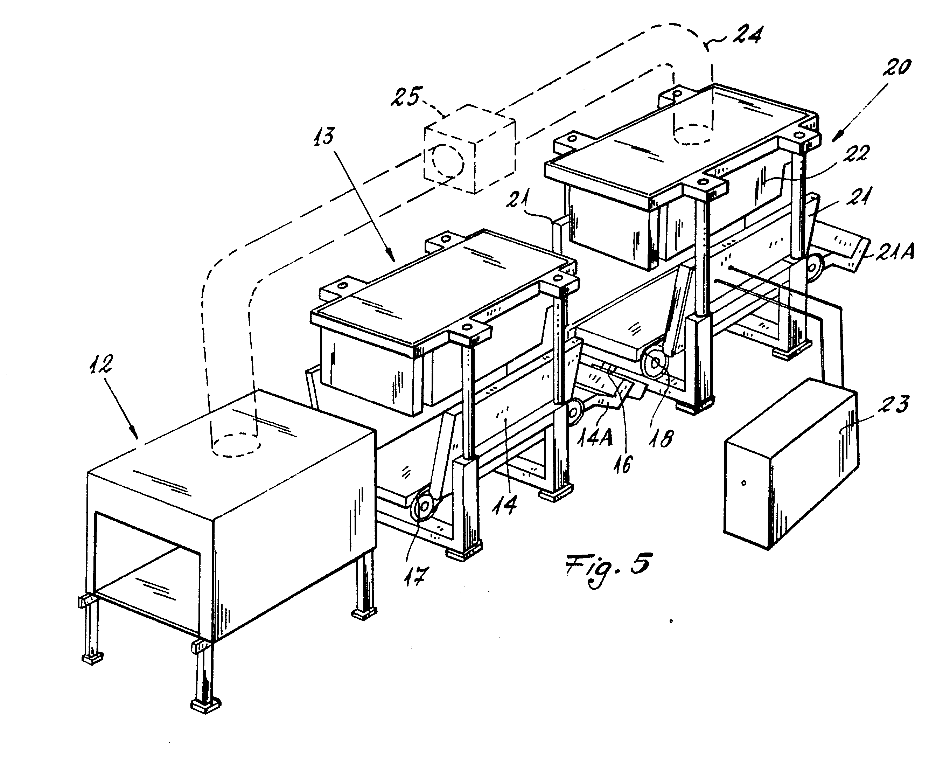

In the embodiment shown in side view in Figure 7, the male elements 40, 41 of the two cascade-disposed moulds 42, 43 are mounted on the same plate 44 which is moveable along the vertical uprights 45, the movements of the counteracting side walls 46, 47 of the moulds 42, 43 and of the cabinet conveyors being simultaneous. In the figure, the preheating oven is indicated by 50.

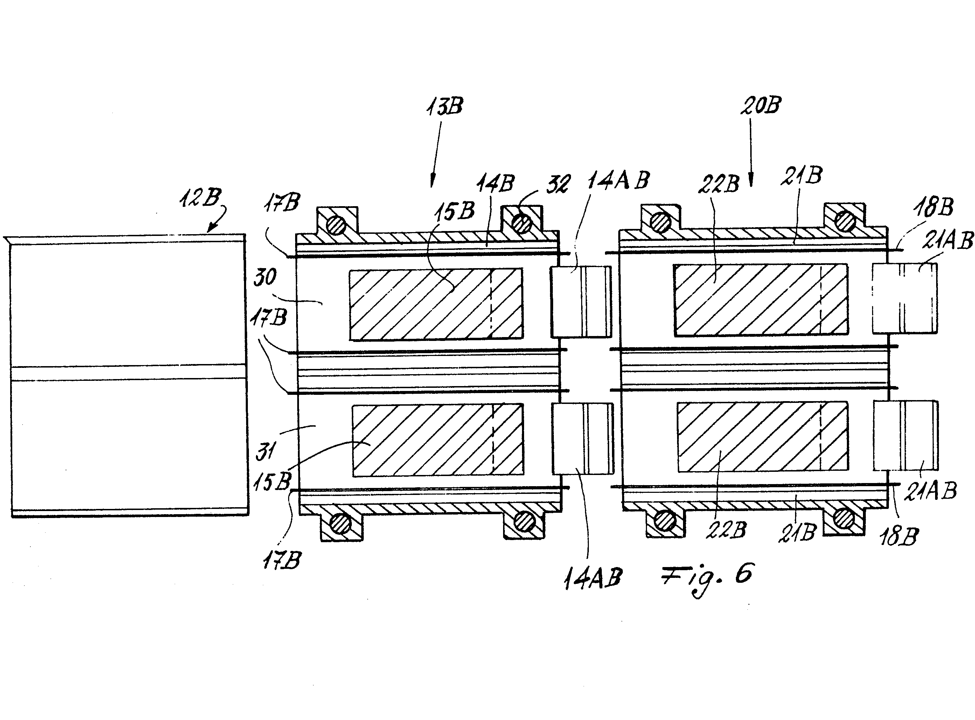

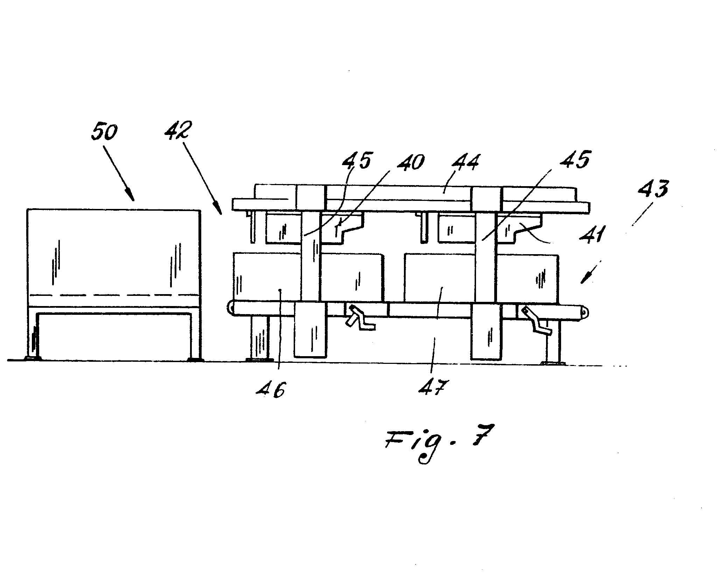

In the alternative line shown diagrammatically in side elevation in Figure 8, the male elements 100 are transferable by means of a conveyor, for example synchronised with the feed movement of the cabinets 101 and with the raising and lowering movement of the plates 102 and 103 of the two moulds 104, 105, which are disposed in succession both with each other and with the preheating oven 106. In this embodiment, the male element 100 is inserted into the compartment 107 of the casing 101 and which is on the point of being loaded into the oven 106. The assembly with the male element inserted in it is transferred by conventional conveyor means 108 and 109 into the first mould 104, of which the walls close about the cabinet, and of which the horizontal counteracting plate 102 lowers to act as the counteracting member for the male element 100 inserted into the assembly. When also the counteracting side panels 111 are closed, the reactive polyurethane components are injected. The mould 104 is then opened, and the conveyor means 109 and 110 convey the cabinet 101 provided with partially polymerised insulation into the second mould 105, which closes by lowering the horizontal counteracting plate 103 and by pivoting the second counteracting panels 112 against the inner walls of the casing. When the residence time in this mould has expired, it is opened and the finished cabinet 101 is removed. The male element 100 is removed from the inner compartment 107 of the cabinet and returned to the beginning of the polymerisation line, as shown by the arrows in the figure concerned.

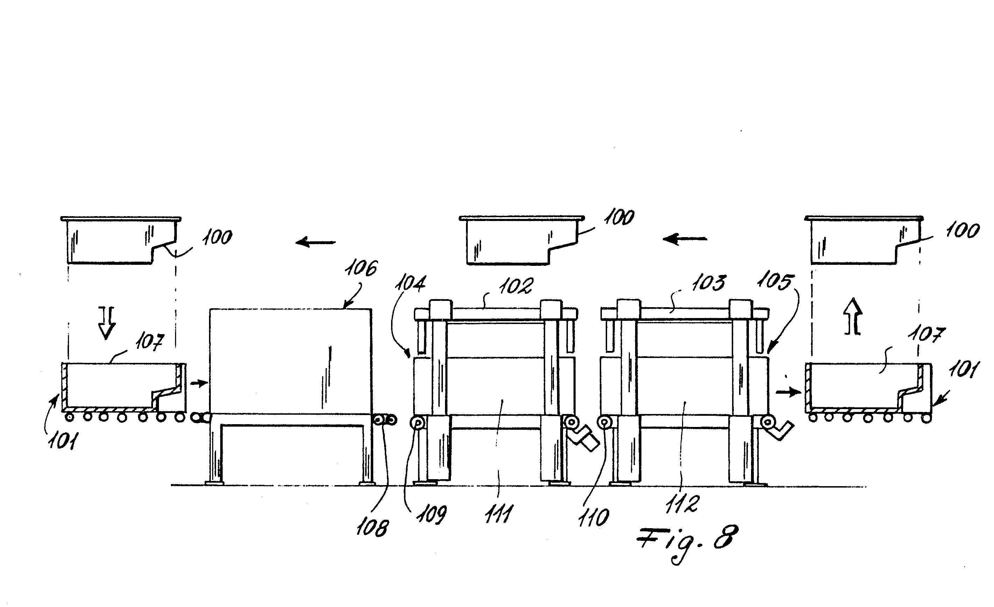

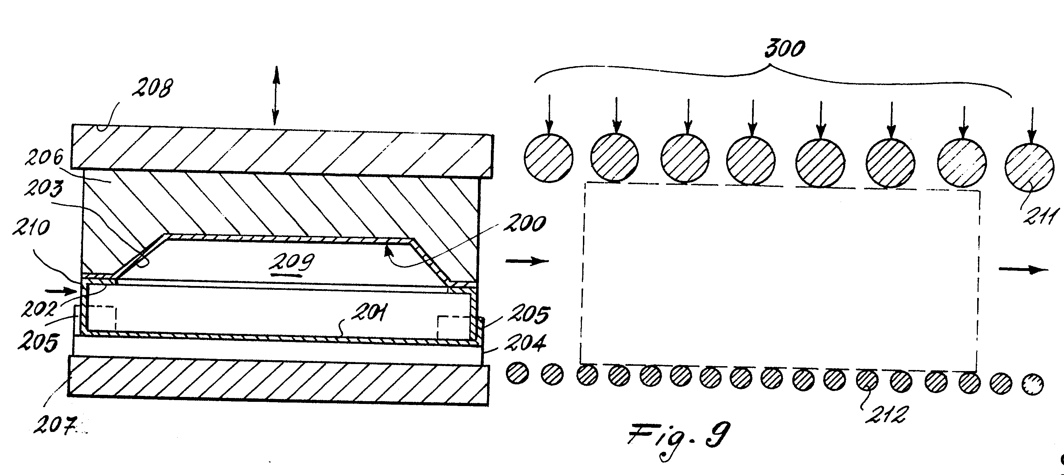

Figure 9 diagrammatically shows the production line for a refrigerator cabinet door 200. The door 200 comprises an outer rectangular metal wall 201 bounded by a continous bent side portion 202, and an inner wall constituted by the backing door 203 which lies peripherally on the continuous side portion 202. A modern construction of the outer metal wall is described in Italian Utility Model Application No. 22047 B/83 of 8.6.1983 in the name of the present applicant. The outer wall 201 is disposed on a support plate 204 on which it is positioned by four corner locators 205. The inner wall 203 is disposed in a conjugate mould 206 which
rests on the bent side portion 202. The unit composed of the elements 201
to 206 is placed between two counteracting and containing panels 207, 208,
and while in this arrangement the reactive polyurethane components are fed
through a nozzle 210 into the interspace 209 between the walls 201, 203.
The thrusts on the walls due to the first phase of the polymerisation reaction are absorbed by said panels. After a certain time, corresponding
to the time $t_A$ of Figure 3, the panels 207, 208 are opened and the said
unit which also contains the polyurethane is transferred by conveyor means
of the previously stated type to a second position 300. The second phase
of polymerisation reaction takes place in this second position until the
time $t_B$ (Figure 3) is reached. Because of the fact that in the position
300 the thrusts due to the polymerisation are much less, they are counteracted by a train of elastically or pneumatically loaded rollers 211 pressing on said unit. This latter is diagrammatically indicated by dashed
lines, and rests on a lower train of suitably motorised rollers 212 which
convey it to a station in which the finished door is removed from the mould.

1. Method for producing casings (1) like cabinets and doors of refrigeration appliances, in which an inner and an outer wall (2,4), after being connected together in a spaced-apart relationship and forming the casing, are placed in a first position, where first counteracting means (14,14A,15) are placed against the inner and outer walls (2,4) and then reactive polyurethane components are fed into the interspace between the walls causing the forming of a thermal insulation by virtue of a polymerisation reaction, characterized in that the polymerisation reaction takes place when the casing (1) is placed in two successive positions, a first phase of the polymerisation reaction taking place in the first position, then at least the first counteracting means (14,14A,15) placed against the outer walls 4 are removed and the casing is brought into a second position in which second counteracting means (21,21A,22) are placed against at least the outer walls of the casing and whereupon the second and final phase of the polymerisation reaction takes place.

2. Method as claimed in claim 1, characterized in that the two reaction phases are of substantially equal duration.

3. Method as claimed in claim 1 or 2, characterized in that during the second period the casing is cooled.

4. Method as claimed in claim 2 or 3, characterized in that the casing, before being placed in the first position, is preheated and that the duration of this preheating is approximately equal to any one of the phases.

5. Method as claimed in claims 3 and 4, characterized in that the casing is cooled by forced air, which after being heated is used for preheating the casing.

6. Machine arrangement for performing the method as claimed in one or more of the preceding claims, comprising a first mould (13) having first counteracting means (14,14A,15) and having feeding means (16) for feeding the reactive polyurethane components into the interspace of the casing, characterized in that there is a second mould (20,) placed after the first mentioned mould (13), and provided with second counteracting means (21,21A,22), and transferring means (17,18) for transferring the casing from the first to the second mould.

7.        Machine arrangement as claimed in Claim 6, characterized in that there is a preheating oven (12) arranged in front of the first mould (13).

8.        Machine arrangement as claimed in Claim 7, characterized in that there are means for cooling the second counteracting means (21).

9.        Machine arrangement as claimed in Claim 8, characterized in that the cooling is effected by forced water circulation and the cooling means comprise a cooling unit (23) having a refrigeration circuit, a heat exchanger and a pump.

10.       Machine arrangement as claimed in Claim 8, characterized in that the cooling is effected by forced air circulation and the cooling means comprise a fan (25) and an air duct (24) for conveying heated air from the second counteracting means (22) to the preheating oven (12).

11.       Machine arrangement as claimed in one of the claims 6 to 10, wherein the first counteracting means comprise movable side panels (111) and a male element (100) for insertion into the casing (101), characterized in that the second counteracting means comprise also movable side panels (112) and that the male element (100) of the first and second mould (104, 105) are the same, so as to remain inside the casing (101) during the production.

12.       Installation as claimed in one of the claims 6 to 10, characterized in that both moulds (42,43) have at least one common top wall (44) provided with two male elements (40,41).

13.       Installation as claimed in claim 6, characterized in that the counteracting means of the first mould comprise a top and a bottom thrust panel (207,208) and the second counteracting means comprise rollers (211, 212) for counteracting and transferring the casing.

Fig. 1

Fig. 2

Fig. 4

0131345

Fig. 3

Fig. 5

Fig. 6

7-VII - PHI 83-010

0131345

Fig. 7

Fig. 8

Fig. 9